Europäisches Patentamt

European Patent Office

Office européen des brevets

(11) Veröffentlichungsnummer: **0 176 622**
A1

# (12) EUROPÄISCHE PATENTANMELDUNG

(21) Anmeldenummer: 84112295.5

(22) Anmeldetag: 12.10.84

(51) Int. Cl.⁴: **F 16 L 1/00**
**F 16 L 51/00, F 16 L 27/12**

(30) Priorität: 31.08.84 DE 3432343
31.08.84 DE 8425979 U

(43) Veröffentlichungstag der Anmeldung:
09.04.86 Patentblatt 86/15

(84) Benannte Vertragsstaaten:
AT BE CH DE FR GB IT LI LU NL SE

(71) Anmelder: Armbruster, Hans, Dipl.-Ing.
Essener Strasse 51 a
D-4030 Ratingen 5(DE)

(72) Erfinder: Armbruster, Hans, Dipl.-Ing.
Essener Strasse 51 a
D-4030 Ratingen 5(DE)

(54) Verfahren mit Vorspann-Kompensator zum Verlegen von Kunststoffmantelrohren mit Vorspannung im Erdreich D-System.

(57) Die Erfindung betrifft ein Verfahren zum Verlegen von Kunststoffverbundmantelrohren im Erdreich, insbesondere für Fernwärme, ohne thermischer Vorspannung während der Verlegung, wobei eine bestimmte Anzahl von Rohren zusammengeschweißt werden, ein vorberechneter Spalt ("a") zwischen zwei Rohren (1,2) gelassen, und in dem der Vorspann-Kompensator eingebaut wird, darnach werden die Muffen isoliert, das Erdreich aufgebracht, die Druckprobe durchgeführt und bei Inbetriebnahme der Leitung nach Schließung der Dehnungsspalte "a" die Rohre (1,2) an der Punkten (A,B,C,E), wo der Vorspann-Kompensator eingebaut ist, zusammengeschweißt, wodurch der Zustand der Vorspannung erzielt wird. Der Rohrzylinder (3) mit den Runddichtungen (4,5), die in einer dafür vorgesehenen Nut liegen, wird in die Rohre (1,2) eingebaut und dichtet den Spalt "a" gegen das Medium Wasser ab. Bei axialer Montage (ohne Richtungsversatz) kann die Führungsvorrichtung (7,8) entfallen.

./...

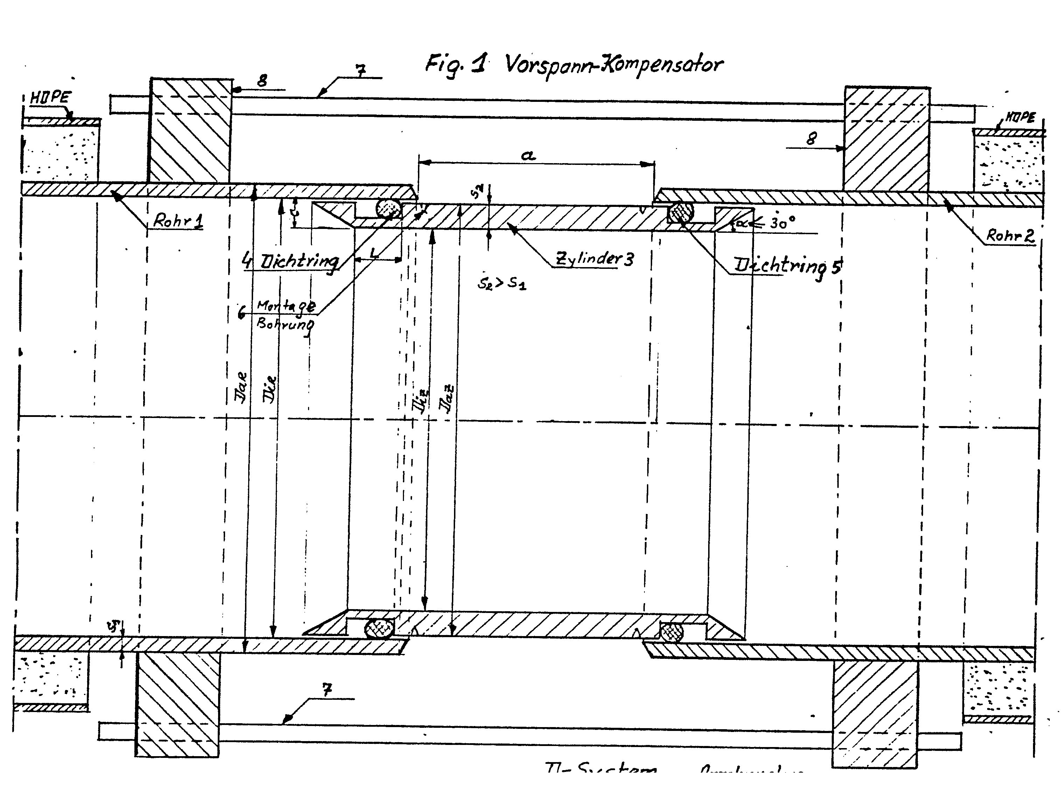

Fig. 1 Vorspann-Kompensator

D-System    Armbruster

Verfahren mit Vorspann-Kompensator zum Verlegen von Kunststoffverbundmantelrohren (KMR) mit Vorspannung im Erdreich.

Die Erfindung betrifft die Vorrichtung der Dehnungsaufnahme bei
verlegten Kunststoffmantelrohren unter Betriebstemperatur.

Bei erdverlegten Verbundrohren treten bei Betriebstemperatur
im Stahlrohr Druckspannungen auf, die die zulässigen Spannungen
im Stahlrohr übersteigen können. Eine Möglichkeit, diese auftretenden Spannungen zu reduzieren, liegt im Vorspannes des
Verbundrohres. Beim Vorspannen also wird im Mediumrohr ein
Dehnungszustand (größere Länge) herbeigeführt, der dem einer
höheren Temperatur (meist $70 - 80^0$C) entspricht.

Dieser Dehnungszustand kann vor dem Einerden der Leitung herbeigeführt werden oder danach.

Die Erfindung betrifft das Verfahren, bei dem der Dehnungszustand der höheren Temperatur nach dem Einerden der Leitung
herbeigeführt wird. Aufgabe der Erfindung ist es, die Technik
der vorgespannten Verlegung von Kunststoffmantelrohren zu vereinfachen und zu verbessern.

Die Verlegung der Fernwärmeleitung erfolgt wie die einer Kalt-
Wasserleitung mit dem großen Kostenvorteil einer rascheren Verlegung bei kürzeren und geringeren Grabenabmessungen und kurzen Baustellenlängen, bei wesentlich geringerer Behinderung des
Straßenverkehrs, was besonders im innerstädtischen Netzausbau
von großer Bedeutung ist.

Um die Dehnung des Verbundrohres zu erleichtern, kann die
Leitung auf einer errechneten Länge mit Gleitmittel bestrichen
oder mit Folie umwickelt werden, um die Reibung mit dem umgebenden Erdreich auf das errechnete Maß zu verringern.

Unter Patentschutz und Gebrauchsmusterschutz soll gestellt
werden der in der Zeichnung aufgeführte Vorspann-Kompensator,
das D-System (D 3 Dehnungs-System) = Ansprüche 1 bis 4.

Es ist bekannt, daß beim Vorspannen der Fernwärmeleitungen vor
der Verfüllung des Rohrgrabens die Längenausdehnung bewirkt wird
durch:eine mobile Heizzentrale, elektrisches Vorwärmeverfahren,
Vakuumdampftechnik, oder aber einer mechanischen Streckung.

(Zeitschrift Fernwärme International 1/1984 Seite 4)

Die Längenausdehnung bei verfülltem Graben zu erreichen, wird bisher von der Firma I.C.Moller aus Dänemark ausgeführt und ist in Anlage 1 beigefügt.

Der Erfindung liegt die Aufgabe zugrunde, die Vorrichtung für die Dehnungsaufnahme zu vereinfachen, den Druckverlust, bedingt durch die Vorrichtung, zu minimieren, die Schweißnähte in gleicher Qualität wie die der Rohrstrecke zu fertigen und die Prüffähigkeit der Schweißnähte zu gewährleisten und schließlich sämtliche Gefahrenstellen einer möglichen Korrosion auszuschalten. (Sihe AGFW-Richtlinien für Kunststoffmantelrohre für Fernwärmeleitungen Seite 112, der Arbeitsgemeinschaft Fernwärme e.V. bei der VDEW Stresemannallee 23, 6000 Frankfurt/M 70).

Diese Aufgabe wird erfindungsmäßig dadurch gelöst, daß zwischen zwei verlegten Rohren der Dehnungsspalt im Innern des Rohres gegenüber dem Medium Wasser abgedichtet wird. Diese Aufgabe wird mit einer Vorrichtung durch die kennzeichnenden Merkmale der Ansprüche 1 bis 4 gelöst.

Die mit der Erfindung erzielten Vorteile bestehen isbesondere darin, daß nach der Längenausdehnung die originalen Leitungsrohre mit einer V-Naht verschweißt werden können, deren Qualität durch eine Röntgen- oder Ultraschallprüfung festgestellt werden kann. Diese Möglichkeit ist bei der E-Muffe von I.C.Moller nicht gegeben (Kehlnaht).

Auch geht bei der E.Muffe der Kraftfluß nicht entlang des Leistungsquerschnittes, was eine konstruktionsmäßige Umleitung der Kräfte erfordert und damit eine stärkere Verengung des Querschnittes zur Folge hat als bei der hier beschriebenen Lösung.

Ein anderer Vorteil besteht in der wesentlich einfacheren Form, die auf der Baustelle in die zu verlegenden Rohre eingebaut werden kann und somit wesentlich kostengünstiger ist.

Die Korrisionsgefahr die bei der E-Muffe zwischen Kompensatorbalg und Außenwand besteht, ist in der beschriebenen Lösung ausgeschlossen. Die auf den beiden Rohren montierten Rohrschellen mit Führungsbolzen garantieren eine axiale Bewegung der Rohre, die für die Längenausdehnung erforderlich ist.

Die geringen Abmessungen des Dichtrings erlauben sehr geringe Querschnittseinschnürungen, mit der Folge daß in der Leitung kein Druckverlust entsteht.

Ein Ausführungsbeispiel der Erfindung ist in der Zeichnung dargestellt und wird im folgenden näher beschrieben.

Es zeigen:

Fig. 1  einen Längsschnitt durch das D-System

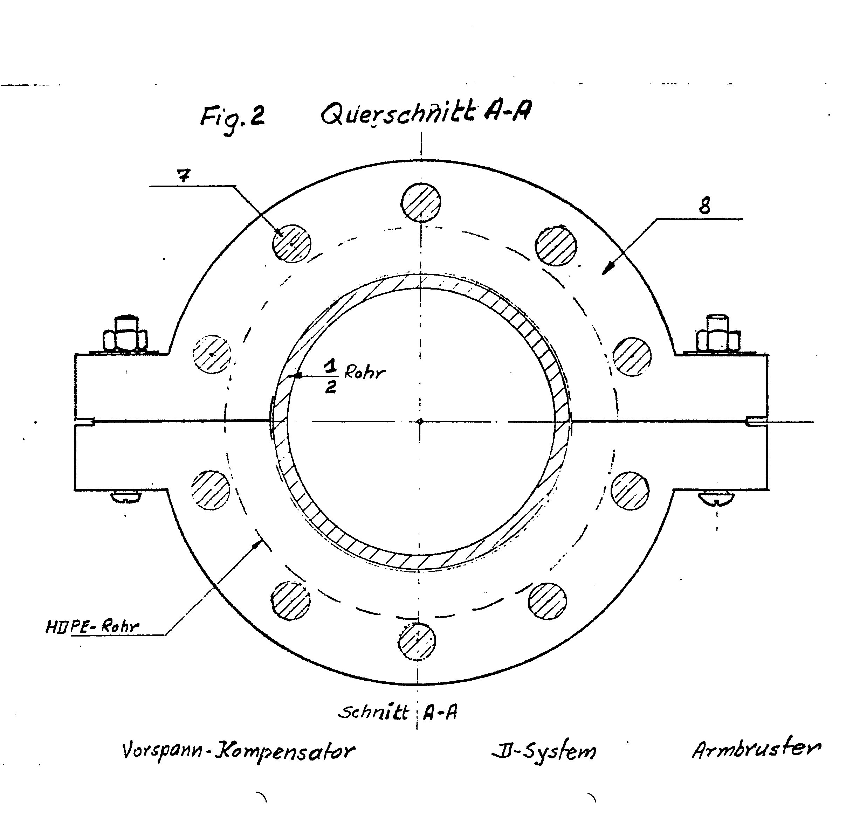

Fig. 2  ein Querschnitt D-System

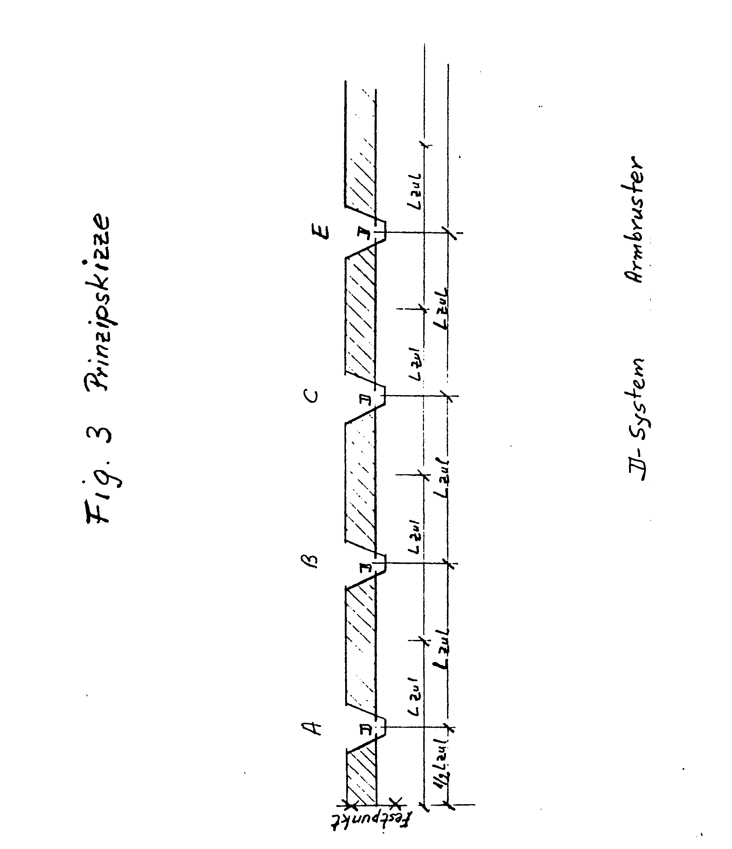

Fig. 3  Prinzipskizze

Nach der errechneten Verlegelänge ist das Verbundrohr 1 im Rohrgraben verlegt. An dieser Stelle ist ein ausreichendes Kopfloch im Rohrgraben vorzusehen. Zylinder 3 mit Dichtung 4 wird in das Rohr 1 eingebaut. In das Rohr 2 wird das Ende des Zylinders 3 mit Dichtring 5 eingeschoben. Das Rohr wird genau axial auf den Zylinder geschoben bis zwischen Rohr 1 und 2 der erwünschte Dehnungsspalt "a" erreicht ist. Die Rohrschellen 8 und Führungsstäbe können auf dem Rohr 1 und 2 montiert werden, falls Rohr 2 nicht ganz axial verlegt ist.

Die weitere Rohrverlegung bis zur nächsten Dehnungszone kann wie bei einer Kalt-Wasserleitung erfolgen. Der Rohrgraben wird verfüllt einschl. Oberflächenwiederherstellung. Nur die Kopflöcher an den Dehnungszonen bleiben offen, oder aber können verfüllt werden, wenn die Dehnungsvorrichtung geschützt wird und müssen vor Inbetriebnahme wieder geöffnet werden.

Die Wasserdruckprobe kann bei Prüfdruck erfolgen. Bei Inbetriebnahme wird die Fernwärmeleitung gleitend auf Betriebstemperatur gefahren. Die Ausdehnung der Rohre bewirkt das Schließen der Dehnungsspalte. Jetzt werden die originalen Leitungsrohre in den Punkten A, B, C, E verschweißt. Die Qualitätsprüfung kann durch Röntgen oder Ultraschall durchgeführt werden. Damit wird gewährleistet, daß auch in diesen Punkten die gleiche Schweißnahtqualität erzielt wird, wie an den übrigen Nähten der Leitung.

Die Rohrschelle 8 und Führungsstäbe 7 werden abmontiert, die Muffenverbindung wird ausgeführt und anschließend das Kopfloch verfüllt und die Straßenoberfläche wiederhergestellt.

Ansprüche

1. Verfahren mit Vorspann-Kompensator zum Verlegen von Kunststoffverbundmantelrohren (KMR) mit Vorspannung im Erdreich, insbesondere von Kunststoffverbundmantelrohren für Fernwärme, wobei eine bestimmte Anzahl von Rohren zu einem Rohrstrang aneinandergeschweißt in einem Graben verlegt, isoliert, auf Dichtigkeit geprüft, hiernach das Erdreich aufgebracht wird und die erforderliche Längenausdehnung der Vorspannung bei Inbetriebnahme der Fernwärmeleitung durch eine Dehnungsvorrichtung erzielt wird, genannt D-System. Unter Kunststoffverbundmantelrohren versteht man ein Verbundsystem, vom Mediumrohr Stahl dem Mantelrohr aus HDPE über den PUR-Hartschaum, das sich als eine fest verbundene Einheit verhält.

2. Verfahren nach Anspruch 1, gekennzeichnet dadurch, daß in zwei in axialer Richtung mit einem vorbestimmten Abstand "a" liegende Rohre, ein Rohrzylinder mit kleinerem Durchmesser mit zwei Runddichtungen, die je in einer Nute liegen, eingebaut wird und damit das Medium Wasser für die Vorspannzeit im Bereich der Dehnungsfuge nach außenhin abdichtet - D-System.

3. Verfahren nach Anspruch 1 bis 2, dadurch gekennzeichnet, daß die Leitungsrohre während des Dehnungsvorganges durch eine Vorrichtung axial geführt werden können.

4. Verfahren nach einem der Ansprüche 1 bis 3, dadurch gekennzeichnet, daß die Leitungsrohre nach Schließung der Dehnungsfuge, bedingt durch das Aufheizen, mit einer V-Naht verschweißt werden, die durch Röntgen oder Ultraschall geprüft werden kann.

5. Verfahren nach Anspruch 1 bis 4, dadurch gekennzeichnet, daß die Längenausdehnung bei verfülltem Rohrgraben erzielt wird.

6. Verfahren nach Anspruch 1 bis 4, dadurch gekennzeichnet, daß in genau berechneten Längenabständen die Dehnungsvorrichtung eingebaut wird.

7. Verfahren nach Anspruch 1 bis 4, gekennzeichnet dadurch, daß die Dehnungslänge "a" eine genau vorausberechnete Größe in Abhängigkeit der Rohrstranglänge, der Verlegetiefe, sowie der Temperaturspreizung ist.

8. Verfahren nach Anspruch 1 bis 4, dadurch gekennzeichnet, daß die Wasserdruckprobe vor der Längenausdehnung durchgeführt werden kann.

9. Verfahren nach Anspruch 1 bis 4, dadurch gekennzeichnet, daß der Vorspann-Kompensator praktisch keinen Druckverlust in der Leitung bewirkt.

10. Verfahren nach einem der Ansprüche 1 bis 4, dadurch gekennzeichnet, daß die vorbestimmte Dehnung der Rohrstränge bei Inbetriebnahme der Fernwärmeleitung erfolgt, das Aufheizen der Leitung die Schließung der Dehnfuge bewirkt und die Leitungsrohre miteinander durch eine V-Naht verschweißt werden können.

Fig. 1 Vorspann-Kompensator

HDPE

HDPE

8  7

8

a

$S^{1}$

$\alpha \leq 30°$

Rohr 1

Rohr 2

4 Dichtring

Zylinder 3

Dichtring 5

$S_2 > S_1$

6 Montage Bohrung

$D_{ae}$  $D_{ie}$  $D_{iz}$  $D_{az}$

$S^1$

7

TI-System

0176622

Fig. 2    Querschnitt A-A

7

8

$\frac{1}{2}$ Rohr

HDPE-Rohr

Schnitt A-A

Vorspann-Kompensator          II-System          Armbruster

0176622

# Fig. 3   Prinzipskizze

II-System      Armbruster

**Europäisches Patentamt**

## EUROPÄISCHER RECHERCHENBERICHT

| EINSCHLÄGIGE DOKUMENTE | | | EP 84112295.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | <u>DE - A -2 419 132</u> (A/S E. RASMUSSEN)<br><br>* Gesamt *<br><br>-- | 1,3-10 | F 16 L 1/00<br>F 16 L 51/00<br>f 16 L 27/12 |
| A | <u>GB - A - 2 000 240</u> (THYSSEN INDUSTRIE AG)<br><br>* Gesamt *<br><br>-- | 1,2 | |
| D,A | AGFW-MITGLIEDERINFORMATION "Kunststoff-Verbundmantelrohre für Fernwärmeleitungen", 24. Juli 1983, Frankfurt/M.<br><br>* Seite 112 *<br><br>---- | 1,3,4 | |

**RECHERCHIERTE SACHGEBIETE (Int. Cl. 4)**

F 16 L 1/00

F 16 L 9/00

F 16 L 13/00

F 16 L 21/00

F 16 L 27/00

F 16 L 39/00

F 16 L 51/00

Der vorliegende Recherchenbericht wurde für alle Patentansprüche erstellt.

| Recherchenort | Abschlußdatum der Recherche | Prüfer |
|---|---|---|
| WIEN | 28-10-1985 | SCHUGANICH |